# EUROPEAN PATENT APPLICATION

(11) **EP 4 462 539 A1**
(43) Date of publication of application: **13.11.2024**
(21) Application number: 23763694.9
(22) Date of filing: 02.03.2023
(51) Int. Cl.: H01M 10/056, H01M 10/0562, H01M 10/052

(54) **COMPOSITE SOLID ELECTROLYTE AND ALL-SOLID-STATE BATTERY COMPRISING SAME**

(30) Priority: 02.03.2022 KR 20220026992
(71) Applicant: LG Chem, Ltd., Yeongdeungpo-gu Seoul 07336 (KR)
(72) Inventor: JEON, Do Yeon, Daejeon 34122 (KR); SON, Byoung Kuk, Daejeon 34122 (KR); LEE, Seong Ho, Daejeon 34122 (KR); PARK, Chang Hun, Daejeon 34122 (KR); KIM, In Gyu, Daejeon 34122 (KR); CHUNG, Ha Bin, Daejeon 34122 (KR)
(74) Representative: Hoffmann Eitle
(86) International application number: PCT/KR2023/002834
(87) International publication number: WO 2023/167495

(57) **Abstract**

The present invention is intended to improve the atmospheric stability of a conventional sulfide-based solid electrolyte, and relates to a composite solid electrolyte and an all-solid-state battery comprising same, the composite solid electrolyte comprising: a sulfide-based solid electrolyte particle; and a polymer coating layer on the sulfide-based solid electrolyte particle, wherein the polymer coating layer includes a polymer having a weight average molecular weight of 5,000-300,000 g/mol and a contact angle of water being greater than or equal to 100° at 25 °C, the polymer of the polymer coating layer is a copolymer of a hydrophobic acrylate-based monomer and an acrylate-based monomer that constitutes the skeleton of the polymer, the hydrophobic acrylate-based monomer includes: an F element or an Si element; or a hydrocarbon having a carbon number of greater than or equal to 10, and the acrylate-based monomer that constitutes the skeleton of the polymer includes a hydrocarbon having a carbon number of less than or equal to 9.

## Description

### TECHNICAL FIELD

### Cross-reference to Related Applications

The present application claims the benefit of the priority of Korean Patent Application No. 10-2022-0026992, filed on March 02, 2022, the disclosure of which is incorporated herein in its entirety by reference.

### Technical Field

The present invention relates to: a sulfide-based composite solid electrolyte having improved air stability and chemical resistance; and an all-solid-state battery including the same.

### BACKGROUND ART

Demand for secondary batteries as an energy source has been significantly increased as technology development and demand with respect to electric vehicles as well as mobile devices have increased. In general, the secondary battery is composed of a positive electrode, a negative electrode, and an electrolyte and a separator which are interposed therebetween. Currently, the most commonly used secondary battery is a lithium secondary battery, and the lithium secondary battery generally uses a liquid electrolyte as an electrolyte. However, the electrolyte in the liquid state is vulnerable to heat and impact and has high flammability, and thus, there are limitations in that the lithium secondary battery is damaged due to external impact or explodes when the temperature rises.

An all-solid-state battery is a battery in which a liquid electrolyte filling a gap between the positive electrode and the negative electrode of a conventional lithium secondary battery is changed into a solid electrolyte to solve the above-described limitations, and is attracting attention as a next-generation battery because it is safe due to no risk of explosion and has higher energy density than the conventional battery. The solid electrolyte used in the all-solid-state battery is a solid-state material capable of conducting lithium ions in the battery, and has ionic conductivity as high as the electrolyte currently applied to the lithium secondary battery. The core materials constituting the solid electrolyte include polymers, sulfides, and oxides, but among them, a sulfide-based solid electrolyte with high ductility and high ionic conductivity is considered suitable for the manufacture of high-capacity large batteries.

However, there is a limitation in that the sulfide-based solid electrolyte has a high reactivity to moisture, and thus reacts with moisture under conditions having low humidity as well as moisture in the atmosphere to generate hydrogen sulfide (H₂S), which is a harmful gas. Accordingly, there are limitations in that toxic hydrogen sulfide has an adverse effect on the safety of the operator as well as the performance of the sulfide-based solid electrolyte itself deteriorates.

Accordingly, there is a need to develop a sulfide-based solid electrolyte having excellent air stability and chemical resistance.

### [PRIOR ART DOCUMENTS]

### [PATENT DOCUMENT]

Japanese Laid-open Patent Publication No. 2020-135947 A
Chinese Laid-open Patent Publication No. 112701345 A

### DISCLOSURE OF THE INVENTION

### TECHNICAL PROBLEM

An aspect of the present invention provides a composite solid electrolyte having improved air stability and chemical resistance.

However, the purpose of the present invention is not limited to the aforementioned, but other purposes not described herein will be clearly understood by those skilled in the art from descriptions below.

### TECHNICAL SOLUTION

According to an aspect of the present invention, there is provided a composite solid electrolyte and an all-solid-state battery.
(1) According to an aspect of the present invention, there is provided a composite solid electrolyte including:
   sulfide-based solid electrolyte particles; and
   a polymer coating layer formed on the sulfide-based solid electrolyte particles,
   wherein: the polymer coating layer includes a polymer having a weight-average molecular weight (Mw) of 5,000 g/mol to 300,000 g/mol and a contact angle to water at 25 °C of at least 100°;
   the polymer of the polymer coating layer is a copolymer of a hydrophobic acrylate-based monomer and an acrylate-based monomer forming a skeleton of the polymer;
   the hydrophobic acrylate-based monomer contains a F element or Si element or contains a hydrocarbon having at least 10 carbon atoms; and
   the acrylate-based monomer forming the skeleton of the polymer contains a hydrocarbon having at most 9 carbon atoms.
(2) In (1) above of the present invention, there is provided the composite solid electrolyte, wherein the sulfide-based solid electrolyte has an argyrodite-type crystal structure.
(3) In (1) or (2) above of the present invention, there is provided the composite solid electrolyte, wherein the hydrophobic acrylate-based monomer is at least one selected from among polydimethylsiloxane-based (meth)acrylate, N-octadecyl (meth)acrylate, stearyl (meth)acrylate, and perfluorohexylethyl (meth)acrylate.
(4) In any one of (1) to (3) above of the present invention, there is provided the composite solid electrolyte, wherein the acrylate-based monomer forming the skeleton of the polymer is at least one selected from among cyclohexyl (meth)acrylate, methyl (meth)acrylate, ethyl (meth)acrylate, n-propyl (meth)acrylate, iso-propyl (meth)acrylate, n-butyl (meth)acrylate, iso-butyl (meth)acrylate, tert-butyl (meth)acrylate, n-pentyl (meth)acrylate, and iso-pentyl (meth)acrylate.
(5) In any one of (1) to (4) above of the present invention, there is provided the composite solid electrolyte, wherein the polymer of the polymer coating layer includes a repeating unit represented by Formula 1 below and a repeating unit represented by Formula 2 below: 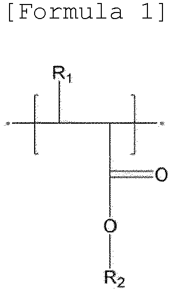
   wherein, in Formula 1 above,
   R₁ is hydrogen or a C₁-C₁₀ alkyl group, and
   R₂ is a C₄-C₁₀ alkyl group containing a cyclic hydrocarbon, and

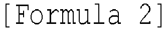

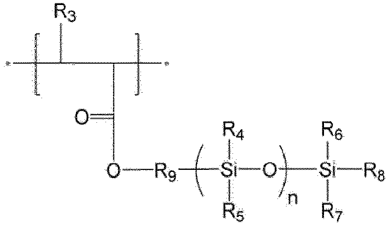

   wherein, in Formula 2 above,
      R₃ to R₈ are each independently hydrogen or a C₁-C₁₀ alkyl group,
      R₉ is a direct linkage, a C1-C10 alkylene group, a C₂-C₁₀ alkenylene group, a C₁-C₁₀ oxyalkylene group, a C₆-C₃₀ arylene group, or C₆-C₃₀ oxyarylene group, and
      n is an integer of 1 or greater.
(6) In any one of (1) to (5) above of the present invention, there is provided the composite solid electrolyte, wherein the polymer coating layer is included in an amount of 0.1 parts by weight to 10 parts by weight with respect to 100 parts by weight of the sulfide-based solid electrolyte particles.
(7) In any one of (1) to (6) above of the present invention, there is provided the composite solid electrolyte, wherein the ionic conductivity is at least 0.001 mS/cm.
(8) In any one of (1) to (7) above of the present invention, there is provided the composite solid electrolyte, wherein when the composite solid electrolyte is exposed to an inert atmosphere, a temperature of 25 °C, and a relative humidity of 0.5% to 0.6%, the rate of hydrogen sulfide (H₂S) generated at the time of 1 hour after exposure is at most 10 cm³/h per 1 g of the composite solid electrolyte.
(9) According to another aspect of the present invention, there is provided an all-solid-state battery including the composite solid electrolyte according to any one of (1) to (8) above.

### ADVANTAGEOUS EFFECTS

The composite solid electrolyte according to the present invention has, on the sulfide-based solid electrolyte particles, the polymer coating layer with excellent air stability and chemical resistance, and thus the composite solid electrolyte itself has not only excellent air stability, but also the chemical resistance can be improved in a wet process when a battery is manufactured.

### BEST MODE FOR CARRYING OUT THE INVENTION

Hereinafter, the present invention will be described in more detail to allow for a clearer understanding of the present invention.

Terms or words used in this specification should not be restrictively interpreted as ordinary meanings or dictionary-based meanings, but should be interpreted as meanings and concepts conforming to the technical spirit of the present invention, based on the principle that an inventor can properly define the concept of a term to explain the invention in the best ways.

The terminology used herein is for the purpose of describing particular exemplary embodiments only and is not intended to limit the present invention. As used herein, the singular forms, "a," "an," and "the" are intended to include the plural forms as well unless the context clearly indicates otherwise.

It will be understood that the terms "include," "comprise," or "have" when used in the specification, specify the presence of stated features, numbers, steps, elements, or combinations thereof, but do not preclude the presence or addition of one or more other features, numbers, steps, elements, or combinations thereof.

### Composite Solid Electrolyte

A composite solid electrolyte according to the present invention includes sulfide-based solid electrolyte particles; and a polymer coating layer formed on the sulfide-based solid electrolyte particles, wherein the polymer coating layer includes a polymer having a weight-average molecular weight (Mw) of 5,000 g/mol to 300,000 g/mol and a contact angle to water at 25 °C of at least 100°. The polymer of the polymer coating layer is a copolymer of a hydrophobic acrylate-based monomer and an acrylate-based monomer forming a skeleton of the polymer. The hydrophobic acrylate-based monomer contains a F element or Si element or contains a hydrocarbon having at least 10 carbon atoms, and the acrylate-based monomer forming the skeleton of the polymer contains a hydrocarbon having at most 9 carbon atoms.

The present inventors have found that the composite solid electrolyte according to the present invention has, on the sulfide-based solid electrolyte particles, a polymer coating layer with excellent air stability (excellent moisture and oxygen blocking performance), and thus the composite solid electrolyte itself has not only excellent air stability, but also the chemical resistance can be improved in dry and wet processes when a battery is manufactured, thereby completing the present invention.

The composite solid electrolyte according to the present invention may suppress the decomposition and deterioration of the sulfide-based solid electrolyte particles when exposed to moisture or oxygen since the polymer coating layer includes the polymer having a weight-average molecular weight (Mw) of 5,000 g/mol to 300,000 g/mol and a contact angle to water at 25 °C of at least 100°. As a result, it is possible to suppress the generation of hydrogen sulfide, which is a toxic gas, and to prevent the ionic conductivity of the composite solid electrolyte from deteriorating.

The polymer of the polymer coating layer is a polymer having high compatibility with a conventional battery binder polymer, which is a polymer of acrylate-based monomers. The polymer of the polymer coating layer is a copolymer of two or more acrylate-based monomers, and specifically, the polymer of the polymer coating layer is a copolymer of a hydrophobic acrylate-based monomer and an acrylate-based monomer forming a skeleton of the polymer.

More specifically, the polymer of the polymer coating layer may be a copolymer obtained by polymerizing the hydrophobic acrylate-based monomer and the acrylate-based monomer forming the skeleton of the polymer at a weight ratio of 1:99 to 10:90.

According to the present invention, the sulfide-based solid electrolyte may have an argyrodite-type crystal structure in terms of high ionic conductivity and low reactivity with a lithium negative electrode. The sulfide-based solid electrolyte may be a sulfide-based solid electrolyte containing Li, P, and S. For example, the sulfide-based solid electrolyte may be Li₇₋ₓPS₆₋ₓAₓ (where, A is Cl, Br, I, Sn, or a combination thereof, and x meets 0≤x≤2).

The polymer coating layer includes a polymer having a weight-average molecular weight (Mw) of 5,000 g/mol to 300,000 g/mol. The polymer may have a weight-average molecular weight (Mw) of 5,000 g/mol to 200,000 g/mol, more specifically, 10,000 g/mol to 100,000 g/mol. Meanwhile, when the weight-average molecular weight (Mw) of the polymer is less than 5,000 g/mol, the amount of remaining monomers not participating in the polymerization reaction is high, and thus the moisture blocking effect may not be sufficient, and when the weight-average molecular weight (Mw) of the polymer is greater than 300,000 g/mol, the contact between sulfide-based solid electrolyte particles may be reduced, and thus the ionic conductivity may be decreased.

The polymer of the polymer coating layer may have a contact angle to water at 25 °C of at least 100°, specifically 100° to 170°, more specifically, 110° to 170°. In this case, the water repellent performance of the composite solid electrolyte may be excellent.

The hydrophobic acrylate-based monomer may contain a F element or Si element capable of imparting water repellent performance, or may contain a hydrocarbon having at least 10 carbon atoms. The hydrophobic acrylate-based monomer may be at least one selected from among a fluorine-containing (meth)acrylate monomer, a silicon-containing (meth)acrylate monomer, and a C₁₀-C₂₀ hydrocarbon-containing (meth)acrylate monomer. In this case, the (meth)acrylate refers to methacrylate or acrylate. In addition, the C₁₀-C₂₀ hydrocarbon may be a linear or branched acyclic hydrocarbon; a cyclic hydrocarbon; or a hydrocarbon having both a linear or branched chain and a ring.

Specifically, the hydrophobic acrylate-based monomer may be at least one selected from among polydimethylsiloxane-based (meth)acrylate, N-octadecyl (meth)acrylate, stearyl (meth)acrylate, and perfluorohexylethyl (meth)acrylate. More specifically, the acrylate-based monomer may be polydimethylsiloxane-based (meth)acrylate, for example, α-butyl-w-(3-methacryloxypropyl)polydimethylsiloxane.

The acrylate-based monomer forming the skeleton of the polymer may be a monomer forming a main chain of the polymer and may contain a hydrocarbon having at most 9 carbon atoms. The acrylate-based monomer forming the skeleton of the polymer may be a C₁-C₉ hydrocarbon-containing (meth)acrylate monomer. In this case, the (meth)acrylate refers to methacrylate or acrylate. In addition, the C₁-C₉ hydrocarbon may be a linear or branched acyclic hydrocarbon; a cyclic hydrocarbon; or a hydrocarbon having both a linear or branched chain and a ring.

Specifically, the acrylate-based monomer forming the skeleton of the polymer may be at least one selected from among cyclohexyl (meth)acrylate, methyl (meth)acrylate, ethyl (meth)acrylate, n-propyl (meth)acrylate, iso-propyl (meth)acrylate, n-butyl (meth)acrylate, iso-butyl (meth)acrylate, tert-butyl (meth)acrylate, n-pentyl (meth)acrylate, and iso-pentyl (meth)acrylate.

The polymer of the polymer coating layer may be, for example, a copolymer of polydimethylsiloxane-based (meth)acrylate and cyclohexyl (meth)acrylate, and specifically, may be a copolymer obtained by polymerizing polydimethylsiloxane-based (meth)acrylate and cyclohexyl (meth)acrylate at a weight ratio of 1:99 to 10:90.

According to the present invention, the polymer of the polymer coating layer may include a repeating unit represented by Formula 1 below and a repeating unit represented by Formula 2 below:

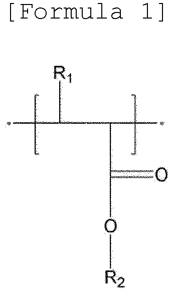

wherein, in Formula 1 above,
R₂ is hydrogen or a C₁-C₁₀ alkyl group, and
R₂ is a C₄-C₁₀ alkyl group containing a cyclic hydrocarbon, and

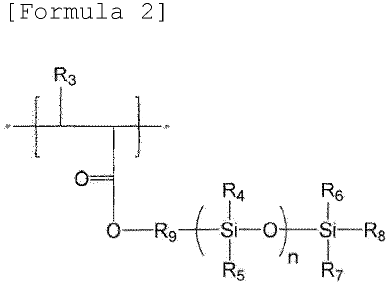

   wherein, in Formula 2 above,
   R₃ to R₈ are each independently hydrogen or a C₁-C₁₀ alkyl group,
   R₉ is a direct linkage, a C1-C10 alkylene group, a C₂-C₁₀ alkenylene group, a C₁-C₁₀ oxyalkylene group, a C₆-C₃₀ arylene group, or C₆-C₃₀ oxyarylene group, and
   n is an integer of 1 or greater.

In the repeating units represented by Formula 1 and Formula 2 above, * means a part linked to another repeating unit.

The polymer may include the repeating unit represented by Formula 1 above and the repeating unit represented by Formula 2 above at a ratio of 1:99 to 10:90 in order to improve the moisture blocking effect and minimize a decrease in ionic conductivity.

According to the present invention, the polymer coating layer may be included in an amount of 0.1 parts by weight to 10 parts by weight, specifically 0.1 parts by weight to 7 parts by weight, and more specifically 0.5 parts by weight to 5 parts by weight, with respect to 100 parts by weight of the sulfide-based solid electrolyte particles. In this case, the moisture blocking effect may be improved, and a decrease in ionic conductivity may be minimized.

According to the present invention, the composite solid electrolyte may have an ionic conductivity of at least 0.001 mS/cm, specifically, 0.001 mS/cm to 20 mS/cm, more specifically, 0.01 mS/cm to 10 mS/cm or 0.01 mS/cm to 5 mS/cm. The higher the ionic conductivity of the electrolyte is, the better it is, but when the polymer coating layer is formed such that the ionic conductivity meets the above range as in the present invention, the moisture stability effect may be improved. The ionic conductivity may be measured in a drying room having a temperature of 22 °C and a relative humidity of 0.7%.

According to the present invention, when the composite solid electrolyte is exposed to an inert atmosphere, a temperature of 25 °C, and a relative humidity of 0.5% to 0.6%, the composite solid electrolyte may have a rate of hydrogen sulfide (H₂S) generated, at the time of 1 hour after exposure, of at most 10 cm³/h per 1 g of the composite solid electrolyte. That is, the composite solid electrolyte according to the present invention has excellent moisture stability, has a low rate of decrease in ionic conductivity even after exposure to moisture, has a small amount of generated hydrogen sulfide, which is a toxic gas, and has a low rate of generation, thereby securing process safety.

When the composite solid electrolyte is exposed to an inert atmosphere, a temperature of 25 °C, and a relative humidity of 0.5% to 0.6%, the composite solid electrolyte may have an amount of hydrogen sulfide (H₂S) generated, during the initial one hour, of at most 10 cm³ per 1 g of the composite solid electrolyte.

The composite solid electrolyte according to the present invention may be prepared by coating the sulfide-based solid electrolyte particles with a polymer composition including a polymer having a weight-average molecular weight (Mw) of 5,000 g/mol to 300,000 g/mol.

The sulfide-based solid electrolyte particles may be synthesized, for example, through a mechanical milling method. Specifically, three precursors of Li₂S, P₂S₅, and LiCl are weighed according to stoichiometry, and then mixed by ball milling. The obtained mixed precursor is heat-treated to be crystallized, and then the mixture is pulverized again through ball milling. The mixing, heat treatment, and pulverization processes are performed in an inert gas atmosphere.

The polymer having a weight-average molecular weight (Mw) of 5,000 g/mol to 300,000 g/mol may be prepared by polymerizing the above-described acrylate-based monomer by suspension polymerization, solution polymerization, bulk polymerization, or the like. For example, after the above-described acrylate-based monomer, and optionally a chain transfer agent, a dispersing agent, a thermal initiator, or the like are dispersed in a solvent, the polymer may be prepared by suspension polymerization while mixing with an agitator.

In addition, the polymer composition may be prepared by dissolving or dispersing the polymer having a weight-average molecular weight (Mw) of 5,000 g/mol to 300,000 g/mol in a solvent such as toluene or xylene. In this case, the weight ratio of the polymer having a weight-average molecular weight (Mw) of 5,000 g/mol to 300,000 g/mol and the solvent such as toluene or xylene may be 1:2 to 2:1.

Finally, the coating may be performed through a process of mixing and stirring the polymer composition with the sulfide-based solid electrolyte and then drying, or may be performed through a process of spraying the polymer composition onto the sulfide-based solid electrolyte and then drying. However, the embodiment is not limited thereto, and may be performed through a method known in the art.

### All-solid-state Battery

The present invention provides an all-solid-state battery including the composite solid electrolyte.

Specifically, the all-solid-state battery includes a positive electrode including a positive electrode active material, a negative electrode including a negative electrode active material, and a solid electrolyte layer including the composite solid electrolyte according to the present invention which is disposed between the positive electrode and the negative electrode.

The all-solid-state battery has a less decrease in ionic conductivity due to moisture, and thus may have excellent initial efficiency, life characteristics, and output characteristics of the battery.

In this case, the all-solid-state battery of the present invention may be manufactured according to a typical method known in the art. For example, the all-solid-state battery may be manufactured by laminating the solid electrolyte layer between the positive electrode and the negative electrode and pressurizing it.

### (1) Positive Electrode

The positive electrode may be prepared by coating a positive electrode collector with a positive electrode slurry including a positive electrode active material, a binder, a conductive agent, and a solvent.

The positive electrode collector is not particularly limited so long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may have fine surface roughness to improve bonding strength with the positive electrode active material, and the positive electrode collector may be used in various shapes such as a film, a sheet, a foil, a net, a porous body, a foam body, a non-woven fabric body, and the like.

The positive electrode active material is a compound capable of reversibly intercalating and deintercalating lithium, wherein the positive electrode active material may specifically include a lithium composite metal oxide including lithium and at least one metal such as cobalt, manganese, nickel, or aluminum. More specifically, the lithium composite metal oxide may include lithium-manganese-based oxide (e.g., LiMnO₂, LiMn₂O₄, etc.), lithium-cobalt-based oxide (e.g.,LiCoO₂, etc.), lithium-nickel-based oxide (e.g., LiNiO₂, etc.), lithium-nickel-manganese-based oxide (e_{.}g_{.}, LiNi_{1-Y}Mn_{Y}O₂ (where 0<Y<1), LiMn_{2-z}Ni_{z}O₄ (where 0<Z<2), etc.), lithium-nickel-cobalt-based oxide (e.g., LiNi_{1-Y1}Co_{Y1}O₂ (where 0<Y1<1), etc.), lithium-manganese-cobalt-based oxide (e.g., LiCo_{1-Y2}Mn_{Y2}O₂ (where 0<Y2<1), LiMn_{2-z1}Co_{z1}O₄ (where 0<Z1<2), etc.), lithium-nickel-manganese-cobalt-based oxide (e.g., Li(NiₚCo_{q}Mnᵣ₁) O₂ (where 0<p<1, 0<q<1, 0<r1<1, and p+q+r1=1) or Li(Niₚ₁Co_{q1}Mnᵣ₂)O₄ (where 0<p1<2, 0<q1<2, 0<r2<2, and p1+q1+r2=2), etc.), or lithium-nickel-cobalt-transition metal (M) oxide (e.g., Li(Niₚ₂Co_{q2}Mnᵣ₃Mₛ₂)O₂ (where M is selected from the group consisting of aluminum (Al), iron (Fe), vanadium (V), chromium (Cr), titanium (Ti), tantalum (Ta), magnesium (Mg), and molybdenum (Mo), and p2, q2, r3, and s2 are atomic fractions of each independent elements, wherein 0<p2<1, 0<q2<1, 0<r3<1, 0<S2<1, and p2+q2+r3+S2=1), etc.), and any one thereof or a compound of two or more thereof may be included.

Among these materials, in terms of the improvement of capacity characteristics and stability of the battery, the lithium composite metal oxide may include LiCoO₂, LiMnO₂, LiNiO₂, lithium nickel manganese cobalt oxide (e.g., Li(Ni_{1/3}Mn_{1/3}Co_{1/3})O₂, Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂, and Li(Ni_{0.8}Mn_{0.1}Co_{0.1})O₂), or lithium nickel cobalt aluminum oxide (e.g., Li(Ni_{0.8}Co_{0.15}Al_{0.05})O₂, etc.), and, in consideration of a significant improvement due to the control of type and content ratio of elements constituting the lithium composite metal oxide, the lithium composite metal oxide may include Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂, or Li(Ni_{0.8}Mn_{0.1}Co_{0.1})O₂, and any one thereof or a mixture of two or more thereof may be used.

The positive electrode active material may be included in an amount of 60 wt% to 99 wt%, preferably 70 wt% to 99 wt%, and more preferably 80 wt% to 98 wt% based on the total weight of a solid content excluding the solvent in the positive electrode slurry.

The binder is a component that assists in the binding between the conductive agent, the active material, and the current collector. Examples of the binder may be polyvinylidene fluoride, polyvinyl alcohol, carboxymethylcellulose, starch, hydroxypropylcellulose, regenerated cellulose, polyvinylpyrrolidone, tetrafluoroethylene, polyethylene, polypropylene, an ethylene-propylene-diene monomer, a sulfonated ethylene-propylene-diene monomer, a styrene-butadiene rubber, a fluoro rubber, and various copolymers thereof.

The binder may be commonly included in an amount of 1 wt% to 20 wt%, preferably 1 wt% to 15 wt%, and more preferably 1 wt% to 10 wt% based on the total weight of the solid content excluding the solvent in the positive electrode slurry.

The conductive agent is a component for further improving the conductivity of the positive electrode active material.

The conductive agent is not particularly limited as long as it has conductivity without causing adverse chemical changes in the battery, and, for example, a conductive material, such as: graphite; a carbon-based material such as carbon black, acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

The conductive agent may be commonly included in an amount of 1 wt% to 20 wt%, preferably 1 wt% to 15 wt%, and more preferably 1 wt% to 10 wt% based on the total weight of the solid content excluding the solvent in the positive electrode slurry.

The solvent may include an organic solvent, such as N-methyl-2-pyrrolidone (NMP), and may be used in an amount such that desirable viscosity is obtained when the positive electrode active material as well as selectively the binder and the conductive agent are included. For example, the solvent may be included in an amount such that a concentration of a solid content including the positive electrode active material as well as optionally the binder and the conductive agent is in a range of 50 wt% to 95 wt%, preferably 70 wt% to 95 wt%, and more preferably 70 wt% to 90 wt%.

### (2) Negative Electrode

The negative electrode, for example, may be prepared by coating a negative electrode collector with a negative electrode slurry including a negative electrode active material, a binder, a conductive agent, and a solvent, or a graphite electrode formed of carbon (C) or a metal itself may be used as the negative electrode.

For example, in a case in which the negative electrode is prepared by coating the negative electrode collector with the negative electrode slurry, the negative electrode collector generally has a thickness of 3 um to 500 um. The negative electrode collector is not particularly limited so long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, an aluminum-cadmium alloy, or the like may be used. Also, similar to the positive electrode collector, the negative electrode collector may have fine surface roughness to improve bonding strength with the negative electrode active material, and the negative electrode collector may be used in various shapes such as a film, a sheet, a foil, a net, a porous body, a foam body, a non-woven fabric body, and the like.

The negative electrode active material may include at least one negative electrode active material selected from the group consisting of: natural graphite, artificial graphite, a carbonaceous material; lithium-containing titanium composite oxide (LTO); metals (Me) such as Si, SiOₓ, Sn, Li, Zn, Mg, Cd, Ce, Ni, or Fe; alloys composed of the metals (Me); oxides (MeOₓ) of the metals (Me); and composites of the metals (Me) and carbon. As the negative electrode active material, a silicon-based negative electrode active material including silicon (Si), a silicon oxide (SiOₓ), or a silicon alloy may be used. In this case, a thin stable SEI layer containing a siloxane bond is formed, and thus high-temperature stability and life characteristics of the battery may be further improved.

The negative electrode active material may be included in an amount of 60 wt% to 99 wt%, preferably 70 wt% to 99 wt%, and more preferably 80 wt% to 98 wt% based on the total weight of the solid content excluding the solvent in the negative electrode slurry.

The binder is a component that assists in the binding between the conductive agent, the active material, and the current collector. Examples of the binder may be polyvinylidene fluoride, polyvinyl alcohol, carboxymethylcellulose, starch, hydroxypropylcellulose, regenerated cellulose, polyvinylpyrrolidone, tetrafluoroethylene, polyethylene, polypropylene, an ethylene-propylene-diene monomer, a sulfonated ethylene-propylene-diene monomer, a styrene-butadiene rubber, a fluoro rubber, and various copolymers thereof.

The binder may be commonly included in an amount of 1 wt% to 20 wt%, preferably 1 wt% to 15 wt%, and more preferably 1 wt% to 10 wt% based on the total weight of the solid content excluding the solvent in the negative electrode slurry.

The conductive agent is a component for further improving conductivity of the negative electrode active material. The conductive agent is not particularly limited as long as it has conductivity without causing adverse chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives may be used.

The conductive agent may be included in an amount of 1 wt% to 20 wt%, preferably 1 wt% to 15 wt%, and more preferably 1 wt% to 10 wt% based on the total weight of the solid content excluding the solvent in the negative electrode slurry.

The solvent may include water or an organic solvent, such as N-methyl-2-pyrrolidone (NMP), and may be used in an amount such that desirable viscosity is obtained when the negative electrode active material as well as optionally the binder and the conductive agent is included. For example, the solvent may be included in an amount such that a concentration of the solid content including the negative electrode active material as well as optionally the binder and the conductive agent is in a range of 50 wt% to 95 wt%, preferably, 70 wt% to 90 wt%.

In a case in which the metal itself is used as the negative electrode, the negative electrode may be prepared by a method of physically bonding, rolling, or depositing a metal on a metal thin film itself or the negative electrode collector. The depositing method may use an electrical deposition method or chemical deposition method of metal.

For example, the metal bonded/rolled/deposited on the metal thin film itself or the negative electrode collector may include one metal selected from the group consisting of lithium (Li), nickel (Ni), tin (Sn), copper (Cu), and indium (In) or an alloy of two metals thereof.

### (3)Solid Electrolyte Layer

The solid electrolyte layer may further include a binder in addition to the solid electrolyte according to the present invention.

The binder is a component that assists in the binding between the conductive agent, the active material, and the current collector. Examples of the binder may be polyvinylidene fluoride, polyvinyl alcohol, carboxymethylcellulose, starch, hydroxypropylcellulose, regenerated cellulose, polyvinylpyrrolidone, tetrafluoroethylene, polyethylene, polypropylene, an ethylene-propylene-diene monomer, a sulfonated ethylene-propylene-diene monomer, a styrene-butadiene rubber, a fluoro rubber, and various copolymers thereof.

The binder may be commonly included in an amount of 1 wt% to 20 wt%, preferably 1 wt% to 15 wt%, and more preferably 1 wt% to 10 wt% based on the total weight of the solid electrolyte layer.

The present invention provides a battery module including the all-solid-state battery as a unit cell and a battery pack including the battery module. Since the battery module and the battery pack include the secondary battery having high capacity, high rate capability, and high cycle characteristics, the battery module and the battery pack may be used as a power source of a medium and large sized device selected from the group consisting of an electric vehicle, a hybrid electric vehicle, a plug-in hybrid electric vehicle, and a power storage system.

### MODE FOR CARRYING OUT THE INVENTION

Hereinafter, preferred examples will be provided for better understanding of the present invention. It will be apparent to those skilled in the art that these examples are only provided to illustrate the present invention and various modifications and alterations are possible within the scope and technical spirit of the present invention, and such modifications and alterations are definitely included in the attached claims.

### Preparation Example

Three precursors of Li₂S, P₂S₅, and LiCl were dry-mixed (by ball-milling) at a molar ratio of 5:1:2. During the dry-mixing, a planetary ball mill in which zirconia balls had been added was used, and the ball mill was rotated at a speed of at least 300 rpm for uniform mixing. Thereafter, the obtained mixed precursor was heat-treated at 600 °C for 12 hours to crystallize, and then the mixture was pulverized again through ball milling to prepare Li₆PS₅Cl having an argyrodite-type crystal structure. All of the above processes were performed under an inert Ar atmosphere.

### Examples and Comparative Examples

### Example 1

Ninety-five parts by weight of cyclohexyl methacrylate (TCI Co., Ltd.), 5 parts by weight of α-butyl-ω-(3-methacryloxypropyl)polydimethylsiloxane (JNC Co., Silaplane FM-0721) (Mw: 5,000g/mol), and 0.6 parts by weight of n-dodecylmercaptan, which is a chain transfer agent, were dispersed in 187 parts by weight of water, and the mixture was mixed with an agitator and suspension-polymerized at 75 °C for 3 hours to prepare copolymer A (Mw: 45,000 g/mol, contact angle to water at 25 °C: 107°).

A polymer composition was prepared by dissolving 5 parts by weight of the copolymer A in 100 parts by weight of xylene.

The polymer composition and Li₆PS₅Cl having an argyrodite-type crystal structure were mixed at a weight ratio of 1:1, and stirred with an agitator for 1 hour, and then the solvent was removed through vacuum-dry to form a polymer coating layer on Li₆PS₅Cl particles having the argyrodite-type crystal structure.

As a result, a composite solid electrolyte was obtained, in which the polymer coating layer including the polymer having a weight-average molecular weight (Mw) of 45,000 g/mol and a contact angle to water at 25 °C of 107° was formed on the Li₆PS₅Cl particles having an argyrodite-type crystal structure.

### Example 2

Ninety-five parts by weight of cyclohexyl methacrylate (TCI Co., Ltd.), 5 parts by weight of α-butyl-ω-(3-methacryloxypropyl)polydimethylsiloxane (JNC Co., Silaplane FM-0721) (Mw: 5,000g/mol), and 3.7 parts by weight of n-dodecylmercaptan, which is a chain transfer agent, were dispersed in 187 parts by weight of water, and the mixture was mixed with an agitator and suspension-polymerized at 75 °C for 3 hours to prepare copolymer B (Mw: 13,000 g/mol, contact angle to water at 25 °C: 108°).

A polymer composition was prepared in the same manner as in Example 1 except that the copolymer B was used instead of the copolymer A, and a polymer coating layer was formed on Li₆PS₅Cl particles having the argyrodite-type crystal structure.

As a result, a composite solid electrolyte was obtained, in which the polymer coating layer including the polymer having a weight-average molecular weight (Mw) of 13,000 g/mol and a contact angle to water at 25 °C of 108° was formed on the Li₆PS₅Cl particles having the argyrodite-type crystal structure.

### Example 3

Ninety-five parts by weight of cyclohexyl methacrylate (TCI Co., Ltd.), 5 parts by weight of α-butyl-ω-(3-methacryloxypropyl)polydimethylsiloxane (JNC Co., Silaplane FM-0721) (Mw: 5,000g/mol), and 0.3 parts by weight of n-dodecylmercaptan, which is a chain transfer agent, were dispersed in 187 parts by weight of water, and the mixture was mixed with an agitator and suspension-polymerized at 75 °C for 3 hours to prepare copolymer C (Mw: 86,000 g/mol, contact angle to water at 25 °C: 107°).

A polymer composition was prepared in the same manner as in Example 1 except that the copolymer C was used instead of the copolymer A, and a polymer coating layer was formed on Li₆PS₅Cl particles having an argyrodite-type crystal structure.

As a result, a composite solid electrolyte was obtained, in which the polymer coating layer including the polymer having a weight-average molecular weight (Mw) of 86,000 g/mol and a contact angle to water at 25 °C of 107° was formed on the Li₆PS₅Cl particles having an argyrodite-type crystal structure.

### Comparative Example 1

The Li₆PS₅Cl having an argyrodite-type crystal structure prepared in Preparation Example was used as a solid electrolyte of Comparative Example 1.

### Comparative Example 2

One hundred parts by weight of cyclohexyl methacrylate (TCI Co., Ltd.) and 0.6 parts by weight of n-dodecylmercaptan, which is a chain transfer agent, were dispersed in 187 parts by weight of water, and the mixture was mixed with an agitator and suspension-polymerized at 75 °C for 3 hours to prepare polymer D (Mw: 45,000 g/mol, contact angle to water at 25 °C: 89°) .

A polymer composition was prepared in the same manner as in Example 1 except that the polymer D was used instead of the copolymer A, and a polymer coating layer was formed on Li₆PS₅Cl particles having an argyrodite-type crystal structure.

As a result, a composite solid electrolyte was obtained, in which the polymer coating layer including the polymer having a weight-average molecular weight (Mw) of 45,000 g/mol and a contact angle to water at 25 °C of 89° water was formed on the Li₆PS₅Cl particles having an argyrodite-type crystal structure.

### Comparative Example 3

Ninety-five parts by weight of cyclohexyl methacrylate (TCI Co., Ltd.), 5 parts by weight of α-butyl-ω-(3-methacryloxypropyl)polydimethylsiloxane (JNC Co., Silaplane FM-0721) (Mw: 5,000g/mol), and 0.05 parts by weight of n-dodecylmercaptan, which is a chain transfer agent, were dispersed in 187 parts by weight of water, and the mixture was mixed with an agitator and suspension-polymerized at 75 °C for 3 hours to prepare copolymer E (Mw: 310,000 g/mol, contact angle to water at 25 °C: 107°).

A polymer composition was prepared in the same manner as in Example 1 except that the copolymer E was used instead of the copolymer A, and a polymer coating layer was formed on Li₆PS₅Cl particles having an argyrodite-type crystal structure.

As a result, a composite solid electrolyte was obtained, in which the polymer coating layer including the polymer having a weight-average molecular weight (Mw) of 310,000 g/mol and a contact angle to water at 25 °C of 107° was formed on the Li₆PS₅Cl particles having an argyrodite-type crystal structure.

### Comparative Example 4

Ninety-five parts by weight of cyclohexyl methacrylate (TCI Co., Ltd.), 5 parts by weight of α-butyl-ω-(3-methacryloxypropyl)polydimethylsiloxane (JNC Co., Silaplane FM-0721) (Mw: 5,000g/mol), and 10 parts by weight of n-dodecylmercaptan, which is a chain transfer agent, were dispersed in 187 parts by weight of water, and the mixture was mixed with an agitator and suspension-polymerized at 75 °C for 3 hours to prepare copolymer F (Mw: 4,500 g/mol, contact angle to water at 25 °C: 97°). For reference, it was found that during the polymerization of the copolymer F, the polymerization stability of α-butyl-ω-(3-methacryloxypropyl)polydimethylsiloxane was deteriorated, and as a result of NMR analysis, 4.4 parts by weight (88 wt% based on the amount of α-butyl-ω-(3-methacryloxypropyl)polydimethylsiloxane initially added) of unreacted α-butyl-ω-(3-methacryloxypropyl)polydimethylsiloxane was detected.

A polymer composition was prepared in the same manner as in Example 1 except that the copolymer F was used instead of the copolymer A, and a polymer coating layer was formed on Li₆PS₅Cl particles having an argyrodite-type crystal structure.

As a result, a composite solid electrolyte was obtained, in which the polymer coating layer including the polymer having a weight-average molecular weight (Mw) of 4,500 g/mol and a contact angle to water at 25 °C of 97° was formed on the Li₆PS₅Cl particles having an argyrodite-type crystal structure.

### Comparative Example 5

One hundred parts by weight of methylmethacrylate (Junsei Chemical Co., Ltd.) and 0.6 parts by weight of n-dodecylmercaptan, which is a chain transfer agent, were dispersed in 187 parts by weight of water, and the mixture was mixed with an agitator and suspension-polymerized at 75 °C for 3 hours to prepare copolymer G (Mw: 44,000 g/mol, contact angle to water at 25 °C: 69°).

A polymer composition was prepared in the same manner as in Example 1 except that the copolymer G was used instead of the copolymer A, and a polymer coating layer was formed on Li₆PS₅Cl particles having an argyrodite-type crystal structure.

As a result, a composite solid electrolyte was obtained, in which the polymer coating layer including the polymer having a weight-average molecular weight (Mw) of 44,000 g/mol and a contact angle to water at 25 °C of 69° was formed on the Li₆PS₅Cl particles having an argyrodite-type crystal structure.

**[Table 1]**

| Division | Weight-average molecular weight (Mw) of polymer included in polymer coating layer (g/mol) | Contact angle to water of polymer included in polymer coating layer ( ° ) |
|---|---|---|
| Example 1 | 45,000 | 107 |
| Example 2 | 13,000 | 108 |
| Example 3 | 86,000 | 107 |
| Comparative Example 1 | - | - |
| Comparative Example 2 | 45,000 | 89 |
| Comparative Example 3 | 310,000 | 107 |
| Comparative Example 4 | 4,500 | 97 |
| Comparative Example 5 | 44,000 | 69 |

### Experimental Example 1: Evaluation of Ionic Conductivity

Each powder of the composite solid electrolytes of Examples 1 to 3, the solid electrolyte of Comparative Example 1, and the composite solid electrolytes of Comparative Examples 2 to 5 was taken by 150 mg and then added to an SUS mold having a diameter of 13 mm. The Potentiostat was connected to the SUS mold while the mold was mounted in a press machine together with PEEK for insulation. The electrolyte structure was sufficiently densified by pressing at 370 MPa, and then while the pressure is slowly lowered and maintained at 100 Mpa, the AC impedance measurement was performed at a measurement frequency of 1 Hz to 7 MHz. The ionic conductivity was calculated from the resistance value measured through Nyquist plot, and the results are shown in Table 2 below. All measurements were performed in a drying room with a temperature of 22 °C and a relative humidity of 0.7%.

### Experimental Example 2: Evaluation of Amount of Hydrogen Sulfide Gas Generated

Each powder (5 mg) of the composite solid electrolytes of Examples 1 to 3, the solid electrolyte of Comparative Example 1, and the composite solid electrolytes of Comparative Examples 2 to 5 was taken, and left in a glove box provided with a hydrogen sulfide sensor (in a drying air atmosphere controlled at a temperature of 25 °C and a relative humidity of 0.59%) for 1 hour or more. The rate of hydrogen sulfide generated per 1 g of the composite solid electrolyte was calculated through the amount of hydrogen sulfide generated at the time of 1 hour after being left. The rate of hydrogen sulfide generated is shown in Table 2 below.

**[Table 2]**

| Division | Ionic Conductivity (mS/cm) | Rate of H₂S generated per 1 g of composite solid electrolyte (cm³/h) | Amount of H₂S initially generated for 1 hour (cm³) |
|---|---|---|---|
| Example 1 | 1.30 | 6.66 | 6.66 |
| Example 2 | 1.43 | 9.02 | 9.02 |
| Example 3 | 1.24 | 7.89 | 7.89 |
| Comparative Example 1 | 2.90 | 26.05 | 26.50 |
| Comparative Example 2 | 1.35 | 16.64 | 16.64 |
| Comparative Example 3 | 0.78 | 17.70 | 17.70 |
| Comparative Example 4 | 1.47 | 13.96 | 13.96 |
| Comparative Example 5 | 1.29 | 20.07 | 20.07 |

It may be seen that the composite solid electrolytes of Examples 1 to 3 have ionic conductivity suitable for use as an electrolyte, and the rate of generated hydrogen sulfide, which is a toxic gas, is remarkably slow.

In contrast, it may be seen that the composite solid electrolytes of Comparative Examples 2 and 5 have less hydrophobic properties with contact angles to water of 89° and 69°, respectively, and thus the moisture blocking effects are reduced. In addition, it may be seen that the composite solid electrolyte of Comparative Example 3 has a high molecular weight of the polymer, and the coating layer is formed to be thick and non-uniform, so that not only the ionic conductivity is low, but also the moisture blocking effect is reduced. Finally, it may be seen that the composite solid electrolyte of Comparative Example 4 has too low molecular weight of the polymer, and the polymerization stability is deteriorated during the preparation process, and the residual amount of monomers that did not participate in the polymerization reaction is high, so that the moisture blocking effect is not sufficient.

Consequently, it may be seen that the composite solid electrolyte according to the present invention has, on the sulfide-based solid electrolyte particles, the polymer coating layer including the polymer (the copolymer of the hydrophobic acrylate-based monomer (containing a F element or a Si element or a hydrocarbon having at least 10 carbon atoms) and an acrylate-based monomer (containing a hydrocarbon having at most 9 carbon atoms) forming a skeleton of the polymer) having a weight-average molecular weight (Mw) of 5,000 g/mol to 300,000 g/mol and a contact angle to water at 25 °C of at least 100°, and thus has the ionic conductivity suitable for use as an electrolyte, and also may prevent the sulfide-based solid electrolyte particles from being decomposed and deteriorated.

## Claims

1. A composite solid electrolyte comprising:
sulfide-based solid electrolyte particles; and
a polymer coating layer formed on the sulfide-based solid electrolyte particles,
wherein:
the polymer coating layer comprises a polymer having a weight-average molecular weight (Mw) of 5,000 g/mol to 300,000 g/mol and a contact angle to water at 25 °C of at least 100°;
the polymer of the polymer coating layer is a copolymer of a hydrophobic acrylate-based monomer and an acrylate-based monomer forming a skeleton of the polymer;
the hydrophobic acrylate-based monomer comprises a F element or Si element or comprises a hydrocarbon having at least 10 carbon atoms; and
the acrylate-based monomer forming the skeleton of the polymer comprises a hydrocarbon having at most 9 carbon atoms.

2. The composite solid electrolyte of claim 1, wherein the sulfide-based solid electrolyte has an argyrodite-type crystal structure.

3. The composite solid electrolyte of claim 1, wherein the hydrophobic acrylate-based monomer is at least one selected from polydimethylsiloxane-based (meth)acrylate, N-octadecyl (meth)acrylate, stearyl (meth)acrylate, and perfluorohexylethyl (meth)acrylate.

4. The composite solid electrolyte of claim 1, wherein the acrylate-based monomer forming the skeleton of the polymer is at least one selected from cyclohexyl (meth)acrylate, methyl (meth)acrylate, ethyl (meth)acrylate, n-propyl (meth)acrylate, iso-propyl (meth)acrylate, n-butyl (meth)acrylate, iso-butyl (meth)acrylate, tert-butyl (meth)acrylate, n-pentyl (meth)acrylate, and iso-pentyl (meth)acrylate.

5. The composite solid electrolyte of claim 1, wherein the polymer of the polymer coating layer comprises a repeating unit represented by the following Formula 1 and a repeating unit represented by the following Formula 2: 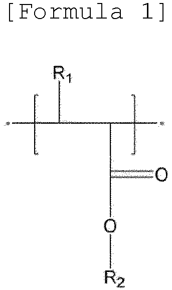 wherein, in Formula 1,
R₁ is hydrogen or a C₁-C₁₀ alkyl group, and
R₂ is a C₄-C₁₀ alkyl group comprising a cyclic hydrocarbon; 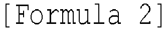 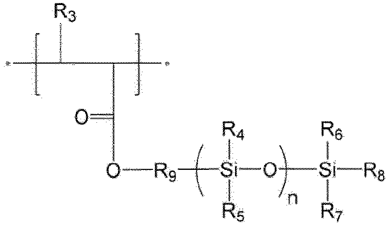 wherein, in Formula 2,
R₃ to R₈ are each independently hydrogen or a C₁-C₁₀ alkyl group,
R₉ is a direct linkage, a C₁-C₁₀ alkylene group, a C₂-C₁₀ alkenylene group, a C₁-C₁₀ oxyalkylene group, a C₆-C₃₀ arylene group, or C₆-C₃₀ oxyarylene group, and
n is an integer of 1 or greater.

6. The composite solid electrolyte of claim 1, wherein the polymer coating layer is included in an amount of 0.1 parts to 10 parts by weight with respect to 100 parts by weight of the sulfide-based solid electrolyte particles.

7. The composite solid electrolyte of claim 1, which has an ionic conductivity of at least 0.001 mS/cm.

8. The composite solid electrolyte of claim 1, wherein when the composite solid electrolyte is exposed to an inert atmosphere, a temperature of 25 °C, and a relative humidity of 0.5% to 0.6%, the composite solid electrolyte has a rate of hydrogen sulfide (H₂S) generated, at the time of 1 hour after exposure, of at most 10 cm³/h per 1 g of the composite solid electrolyte.

9. An all-solid-state battery comprising the composite solid electrolyte according to any one of claims 1 to 8.
